(19) Europäisches Patentamt / European Patent Office / Office européen des brevets

(11) **EP 4 386 498 A1**

(12) **DEMANDE DE BREVET EUROPEEN**

(43) Date de publication:
**19.06.2024 Bulletin 2024/25**

(21) Numéro de dépôt: **23213973.3**

(22) Date de dépôt: **04.12.2023**

(51) Classification Internationale des Brevets (IPC):
*G05B 23/02* (2006.01)   *G05B 19/04* (2006.01)
*G05B 19/406* (2006.01)

(52) Classification Coopérative des Brevets (CPC):
**G05B 23/02; G05B 19/0405; G05B 19/406**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.12.2022 FR 2213315**

(71) Demandeur: **Airbus Operations SAS**
**31060 Toulouse (FR)**

(72) Inventeurs:
• **HAMM, Ivan**
**31060 Toulouse (FR)**

• **POULACHON, Gérard**
**71250 Cluny (FR)**
• **ROSSI, Frédéric**
**71250 Cluny (FR)**
• **MAURY, Nicolas**
**31060 Toulouse (FR)**
• **ELIAS-BIREMBAUX, Hélène**
**71250 Cluny (FR)**

(74) Mandataire: **Gevers & Orès**
**Immeuble le Palatin 2**
**3 Cours du Triangle**
**CS 80165**
**92939 Paris La Défense Cedex (FR)**

(54) **PROCÉDÉ ET DISPOSITIF DE VALIDATION D'UN JEU DE PARAMÈTRES OPÉRATOIRES D'UNE MACHINE-OUTIL, EN PARTICULIER POUR UN FRAISAGE**

(57)    - Procédé et dispositif de validation d'un jeu de paramètres opératoires d'une machine-outil, en particulier pour un fraisage.
- Le procédé de validation comporte une suite d'étapes consistant à acquérir un ensemble de données d'entrée (10) comprenant un jeu de paramètres opératoires (3), à réaliser un fraisage de référence d'une première pièce témoin et à mesurer des valeurs d'efforts d'usinage (12) appliqués par un outil de fraisage, à déterminer des coefficients d'efforts spécifiques (13) représentatifs desdits efforts d'usinage (12), à réaliser une coupe orthogonale d'une seconde pièce témoin et à mesurer des valeurs de grandeurs géométriques (14), à calculer un flux thermique tertiaire généré lors de ladite coupe orthogonale, à calculer une température finale à partir dudit flux thermique tertiaire, et à comparer la température finale à une température critique de manière à valider ou rejeter le jeu de paramètres opératoires (3), ledit procédé permettant d'établir, de manière simple, rapide et peu coûteuse, un critère de température pour valider ou rejeter le jeu de paramètres opératoires (3) dans l'objectif de garantir la santé matière d'une pièce à usiner, tout en maximisant la productivité.

Fig. 1

**Description**

**Domaine technique**

La présente invention concerne un procédé et un dispositif de validation d'un jeu de paramètres opératoires d'une machine-outil, en particulier pour un fraisage.

**Etat de la technique**

Lors de l'usinage d'une pièce, des phénomènes physiques, aussi appelés cas de chargement, susceptibles d'altérer des caractéristiques mécaniques de la pièce usinée peuvent intervenir. Ces cas de chargement dépendent, notamment, des paramètres d'usinage. Par exemple, un usinage avec des paramètres mettant en jeu de grandes déformations, de grandes vitesses de déformation ou des gradients de température importants, peut fragiliser la pièce usinée en réduisant sa résistance mécanique, notamment sa limite en fatigue.

Or, dans certains domaines, notamment en aéronautique, des procédés à très grande vitesse (Usinage à Grande Vitesse) avec des profondeurs de passe importantes sont souvent utilisés pour des raisons de coût de production. Ce type de procédé peut mettre en jeu des cas de chargement importants. De plus, les pièces aéronautiques peuvent être coûteuses à fabriquer (formes complexes, grandes tailles, matériaux coûteux) et présenter des enjeux de sécurité, ce qui rend leur intégrité mécanique particulièrement importante. Il est donc primordial de quantifier les cas de chargement, afin de pouvoir estimer les effets d'un usinage sur la santé matière d'une pièce à usiner.

Les cas de chargement comprennent des chargements mécaniques (forces, pressions) et des chargements thermiques (flux thermiques, températures). On sait, par exemple, que lors de l'usinage d'une pièce, une température trop importante induite au niveau de la surface usinée crée des contraintes résiduelles néfastes pour la durée de vie en fatigue de ladite pièce. S'il existe des méthodes pour limiter la température au niveau des surfaces usinées (injection de fluide de refroidissement, ... ), il n'existe en revanche pas de solution pour estimer cette température préalablement à l'usinage. En particulier, il n'existe pas de solution permettant de savoir si des paramètres d'un usinage vont générer un cas de chargement néfaste ou non pour la santé matière d'une pièce à usiner.

**Exposé de l'invention**

La présente invention a pour objet de proposer une solution pour remédier au manque précité. Elle concerne un procédé de validation d'un jeu de paramètres opératoires d'une machine-outil, en particulier pour un fraisage.
Selon l'invention, le procédé de validation comporte au moins la suite d'étapes suivante :

- une étape d'acquisition consistant à acquérir un ensemble de données d'entrée comprenant au moins :

  • un jeu de paramètres opératoires à valider, comportant des paramètres liés à la machine-outil et des paramètres liés à l'outil de fraisage ; et
  • un jeu de paramètres additionnels relatif à des caractéristiques de l'outil de fraisage et de la pièce à usiner ;

- une étape de fraisage consistant à réaliser, à l'aide de l'outil de fraisage, au moins un fraisage de référence d'une première pièce témoin, représentative de la pièce à usiner, et à mesurer des valeurs d'efforts d'usinage appliqués par ledit outil de fraisage sur ladite première pièce témoin ;
- une première étape de traitement de données consistant à déterminer, à partir d'au moins certaines données de l'ensemble de données d'entrée et des valeurs d'efforts d'usinage mesurées à l'étape de fraisage, des coefficients d'efforts spécifiques représentatifs desdits efforts d'usinage ;
- une étape de coupe orthogonale consistant à réaliser, à l'aide de l'outil de fraisage, au moins une coupe orthogonale d'une seconde pièce témoin, représentative de la pièce à usiner, et à mesurer au moins des valeurs de grandeurs géométriques liées à un copeau de référence généré lors de ladite coupe orthogonale ; et
- une deuxième étape de traitement de données comprenant au moins :

  • une première sous-étape de calcul consistant à calculer, à partir d'au moins certaines données de l'ensemble de données d'entrée, d'au moins l'un des coefficients d'efforts spécifiques et des valeurs des grandeurs géométriques mesurées à l'étape de coupe orthogonale, un flux thermique dit tertiaire généré dans une zone dite de cisaillement tertiaire de la seconde pièce témoin lors de ladite coupe orthogonale ;
  • une deuxième sous-étape de calcul consistant à calculer, à partir du flux thermique tertiaire, une température dite finale représentative de la température maximale au niveau d'une surface usinée de la seconde pièce témoin lors de la coupe orthogonale ; et

- une sous-étape de comparaison consistant à comparer la température finale à une température dite critique et à :

  ◦ rejeter le jeu de paramètres opératoires si la température finale est supérieure ou égale à la température critique ; et
  ◦ valider le jeu de paramètres opératoires si la température finale est inférieure à la température critique.

Ainsi, grâce à l'invention, on dispose d'un procédé permettant d'estimer de manière simple, rapide et peu coûteuse, la température générée au niveau d'une surface d'une pièce que l'on souhaite usiner, lors d'une opération de fraisage. Cette information permet de valider ou de rejeter le jeu de paramètres opératoires utilisé pour réaliser ladite opération de fraisage en fonction d'un critère simple correspondant à un seuil de température critique à ne pas dépasser. On est alors en mesure d'adapter le jeu de paramètres opératoires de manière à garantir la santé matière de la pièce que l'on souhaite usiner, tout en maximisant la productivité.

Par « garantir la santé matière », on entend éviter toutes les actions qui ont pour effet de modifier une pièce au niveau d'au moins un paramètre topographique (rugosité, discontinuité de surface, brulure, ...), d'au moins un état microstructural (taille de grains, déformations plastiques, fraction de phase, ...) ou d'au moins une propriété mécanique (contraintes résiduelles, dureté, limite en fatigue, par exemple à $10^5$ cycles, ...), au-delà d'une limite prédéterminée.

Par « maximiser la productivité », on entend maximiser au moins une durée de vie de l'outil de fraisage et/ou un débit de copeau généré par ledit outil de fraisage lors d'une opération d'usinage.

Avantageusement, le jeu de paramètres opératoires comprend au moins certains des paramètres opérationnels suivants :

- une vitesse d'avance de l'outil de fraisage ;
- une fréquence de rotation de l'outil de fraisage ;
- une vitesse de coupe de l'outil de fraisage ;
- une avance par dent de l'outil de fraisage ;
- un engagement radial de l'outil de fraisage ;
- un engagement axial de l'outil de fraisage ;
- un diamètre de l'outil de fraisage ;
- un nombre de dents de l'outil de fraisage ;
- un angle d'hélice de l'outil de fraisage ;
- un angle de coupe d'arêtes de coupe de l'outil de fraisage ;
- un angle de dépouille des arêtes de coupe de l'outil de fraisage ;
- un rayon d'acuité des arêtes de coupe de l'outil de fraisage ; et
- une usure en dépouille des arêtes de coupe de l'outil de fraisage.

En outre, avantageusement, la première étape de traitement de données comprend :

- une sous-étape de calcul analytique consistant à déterminer, à partir d'un modèle cinématique du fraisage de référence réalisé à l'étape de fraisage, des expressions mathématiques des efforts d'usinage théoriques en fonction des coefficients d'efforts spécifiques ; et
- une sous-étape d'identification consistant à identifier lesdits coefficients d'efforts spécifiques en minimisant les écarts entre les valeurs d'efforts d'usinage mesurées à l'étape de fraisage et les efforts d'usinage théoriques.

Par ailleurs, de façon avantageuse, l'étape de coupe orthogonale consiste à mesurer les valeurs d'au moins certaines des grandeurs géométriques suivantes :

- un angle d'inclinaison de plan de cisaillement primaire ;
- une longueur de contact de copeau sur la face de coupe ;
- une longueur de contact en dépouille ; et
- une épaisseur moyenne de copeau coupé.

Dans un mode de réalisation particulier, le procédé comporte une troisième étape de traitement de données, mise en oeuvre après la deuxième étape de traitement de données si la température finale est inférieure à la température critique, ladite troisième étape de traitement de données comprenant :

- une troisième sous-étape de calcul consistant à calculer, à partir d'au moins certaines données de l'ensemble de données d'entrée et des valeurs des grandeurs géométriques mesurées à l'étape de coupe orthogonale, un flux thermique dit primaire généré dans une zone dite de cisaillement primaire de la seconde pièce témoin, et un flux thermique dit secondaire généré dans une zone dite de cisaillement secondaire de la seconde pièce témoin ;

- une quatrième sous-étape de calcul consistant à calculer, à partir du flux thermique primaire et du flux thermique secondaire, une température dite totale représentative de la température maximale au niveau d'une surface usinée de la seconde pièce témoin lors de la coupe orthogonale ; et
- une sous-étape de comparaison consistant à comparer la température totale à la température critique et à :

  ◦ rejeter le jeu de paramètres opératoires si la température totale est supérieure ou égale à la température critique ; et
  ◦ valider le jeu de paramètres opératoires si la température totale est inférieure à la température critique.

La présente invention concerne également un dispositif de validation du jeu de paramètres opératoires de ladite machine-outil comportant l'outil de fraisage et destinée à réaliser un fraisage de la pièce à usiner.

Selon l'invention, le dispositif comporte au moins :

- une unité d'acquisition configurée pour recevoir un ensemble de données d'entrée comprenant au moins :

  • un jeu de paramètres opératoires à valider, comportant des paramètres liés à la machine-outil et des paramètres liés à l'outil de fraisage ; et
  • un jeu de paramètres additionnels relatif à des caractéristiques de l'outil de fraisage et de la pièce à usiner ;

- une première unité de traitement de données configurée pour déterminer, à partir de l'ensemble de données d'entrée et de valeurs d'efforts d'usinage, des coefficients d'efforts spécifiques représentatifs desdits efforts d'usinage, lesdites valeurs d'efforts d'usinage correspondant à des valeurs d'efforts appliqués par l'outil de fraisage sur une première pièce témoin, représentative de la pièce à usiner, lors d'un fraisage de référence de ladite première pièce témoin ;
- une deuxième unité de traitement de données configurée pour :

  • calculer, à partir d'au moins certaines données de l'ensemble de données d'entrée, d'au moins l'un des coefficients d'efforts spécifiques et de valeurs de grandeurs géométriques, un flux thermique dit tertiaire généré dans une zone dite de cisaillement tertiaire, lesdites valeurs de grandeurs géométriques correspondent à des valeurs liées à un copeau de référence d'une seconde pièce témoin généré par l'outil de fraisage lors d'une coupe orthogonale de ladite seconde pièce témoin ;
  • calculer, à partir du flux thermique tertiaire, une température dite finale représentative de la température maximale au niveau d'une surface usinée de la seconde pièce témoin lors de la coupe orthogonale ; et
  • comparer la température finale à une température dite critique et à :

    ◦ rejeter le jeu de paramètres opératoires si la température finale est supérieure ou égale à la température critique ; et
    ◦ valider le jeu de paramètres opératoires si la température finale est inférieure à la température critique.

Dans un mode de réalisation particulier, le dispositif comporte une troisième unité de traitement de données configurée pour :

- calculer, à partir d'au moins certaines données de l'ensemble de données d'entrée et des valeurs des grandeurs géométriques mesurées lors de la coupe orthogonale, un flux thermique dit primaire généré dans une zone dite de cisaillement primaire de la seconde pièce témoin, et un flux thermique dit secondaire généré dans une zone dite de cisaillement secondaire de la seconde pièce témoin ;
- calculer, à partir du flux thermique primaire et du flux thermique secondaire, une température dite totale représentative de la température maximale au niveau d'une surface usinée de la seconde pièce témoin lors de la coupe orthogonale ; et
- comparer la température totale à la température critique et à :

  ◦ rejeter le jeu de paramètres opératoires si la température totale est supérieure ou égale à la température critique ; et
  ◦ valider le jeu de paramètres opératoires si la température totale est inférieure à la température critique.

Par ailleurs, avantageusement, le dispositif comporte une platine dynamométrique configurée pour mesurer les valeurs des efforts d'usinage lors du fraisage de référence de la première pièce témoin.

En outre, de façon avantageuse, le dispositif comporte une unité de mesure configurée pour réaliser des mesures optiques des grandeurs géométriques lors de la coupe orthogonale de la seconde pièce témoin.

**Brève description des figures**

Les figures annexées feront bien comprendre comment l'invention peut être réalisée. Sur ces figures, des références identiques désignent des éléments semblables.

La figure 1 est une vue schématique d'un mode de réalisation particulier d'un dispositif de validation d'un jeu de paramètres opératoires d'une machine-outil.
La figure 2 est un schéma synoptique d'un mode de réalisation particulier d'un procédé de validation d'un jeu de paramètres opératoires d'une machine-outil.
La figure 3 est une vue schématique, en perspective et anamorphosée, d'un outil de fraisage réalisant un fraisage d'une pièce à usiner.
La figure 4 est une vue schématique de la figure 3 en coupe transversale de l'outil de fraisage de la figure 3 usinant la pièce à usiner.
La figure 5 est une vue agrandie de la figure 4 détaillant la génération d'un copeau par une arête de coupe de l'outil de fraisage.
La figure 6 est une vue en coupe transversale de l'interface entre une arête de coupe de l'outil de fraisage de la figure 3 et la pièce à usiner.
La figure 7 est une vue latérale d'un outil de fraisage.
La figure 8 est une vue schématique, en perspective, d'un fraisage de référence d'une première pièce témoin montrant des efforts d'usinage exercés par l'outil de fraisage sur ladite première pièce témoin.
La figure 9 est une vue en perspective de l'outil de fraisage réalisant une coupe orthogonale d'une seconde pièce témoin.
La figure 10 est une vue en coupe transversale de l'outil de fraisage de la figure 9.
La figure 11 est une vue schématique de la vue de la figure 10 montrant des flux thermiques générés lors de la coupe orthogonale de la seconde pièce témoin.

**Description détaillée**

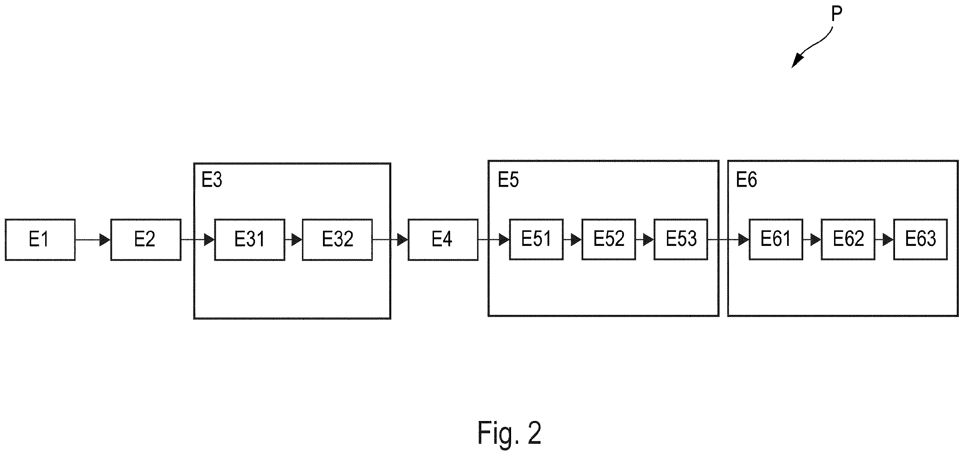

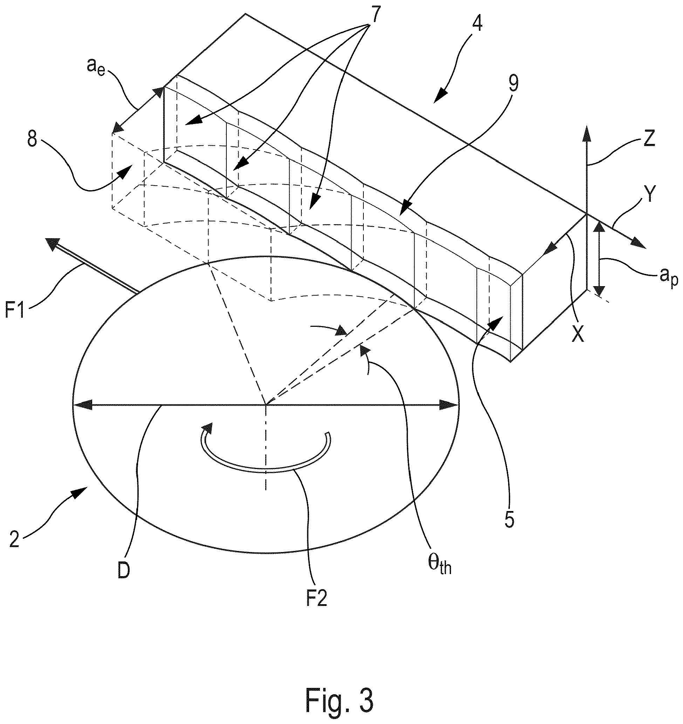

Le dispositif de validation 1 (ci-après dispositif 1) permettant d'illustrer l'invention et représenté dans un mode de réalisation particulier sur la figure 2, est mis en oeuvre sur une machine-outil (non représentée), par exemple une machine-outil à commande numérique (MOCN). La machine-outil comporte un outil de fraisage 2, représenté schématiquement de la figure 3 à la figure 11, à l'aide duquel elle réalise des opérations usuelles de fraisage sur une pièce à usiner 4. Il peut s'agir d'opérations de fraisage variées, par exemple un fraisage en configuration contournage. Pour mettre en forme ladite pièce à usiner 4, la machine-outil a besoin d'être configurée ou programmée avec un jeu de paramètres opératoires 3 permettant de réaliser les opérations de fraisage souhaitées. Le jeu de paramètres opératoires 3 comprend, notamment, des paramètres liés à la machine-outil et des paramètres liés à l'outil de fraisage 2.

Le dispositif 1 permet d'estimer des effets induits par un fraisage utilisant le jeu de paramètres opératoires 3 sur la pièce à usiner 4 et de conclure sur l'acceptabilité dudit jeu de paramètres opératoires 3. Plus particulièrement, il permet de rejeter ou de valider le jeu de paramètres opératoire 3 selon que ce dernier est susceptible d'entraîner ou non un fraisage impactant la santé matière de la pièce à usiner 4. Le critère permettant de valider ou non le jeu de paramètres opératoires 3 est la température générée par un fraisage au niveau d'une surface usinée 5 de la pièce à usiner 4.

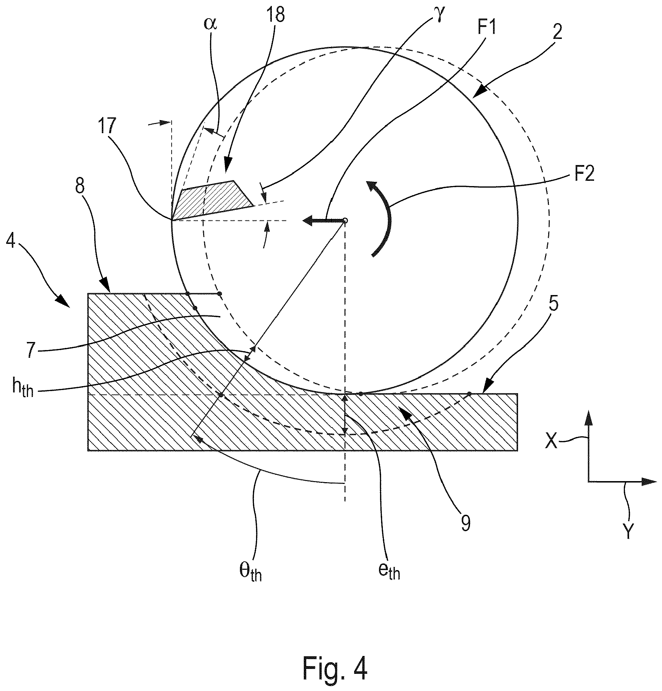

En effet, comme représenté sur la figure 3 et la figure 4, lors du fraisage, l'outil de fraisage 2 enlève des portions de matières correspondant à des copeaux 7 sur une face 8 de la pièce à usiner 4 de manière à obtenir la surface usinée 5. Cet enlèvement de matière a, notamment, pour effet de générer de la chaleur (ou un chargement thermique) au niveau de la surface usinée 5 dans une zone dite thermique 9 correspondant à une couche superficielle de la pièce 4 affectée thermiquement par le fraisage. Au-delà d'une certaine valeur de température obtenue dans cette zone thermique 9, le chargement thermique entraîne l'apparition de contraintes résiduelles au niveau de la surface usinée 5, en particulier des contraintes résiduelles de traction, néfastes pour la santé matière de la pièce à usiner 4.

Le dispositif 1 permet d'estimer la température obtenue au niveau de la surface usinée 5 de la pièce à usiner 4, lors d'un fraisage utilisant le jeu de paramètres opératoires 3, et d'en déduire si ce fraisage est néfaste ou non pour la santé matière de la pièce à usiner 4. De préférence, il permet d'estimer la température maximale obtenue au niveau de la surface usinée 5 lors d'un fraisage. Par extension, il permet ainsi de valider ou non le jeu de paramètre opératoires 3, comme expliqué en détail dans la suite de la description. Toutefois, cette estimation doit être réalisée préalablement au fraisage de la pièce à usiner 4. Aussi, pour réaliser cette estimation, le dispositif 1 utilise des pièces témoin 4A et 4B pour réaliser des mesures expérimentales servant à valider ou non le jeu de paramètres opératoires 3.

Dans le cadre de la présente invention, les pièces témoins 4A et 4B désignent des pièces réalisées dans le même matériau que celui de la pièce à usiner 4 et qui sont représentatives de ladite pièce à usiner 4. On entend par « représentatives » qu'elles présentent au moins les mêmes propriétés et caractéristiques mécaniques que la pièce à usiner 4. Par ailleurs, comme décrit plus loin dans la description, le dispositif 1 utilise une première pièce témoin 4A pour réaliser une première opération (un fraisage de référence) et une seconde pièce témoin 4B pour réaliser une seconde opération (une coupe orthogonale). Ces deux opérations sont indépendantes l'une de l'autre et les pièces témoin 4A et 4B peuvent correspondre à des pièces distinctes ou bien à une seule et même pièce sur laquelle on réaliserait ces deux opérations.

Dans un mode de réalisation préféré, la pièce à usiner 4 est réalisée en matériau métallique, par exemple en acier ou en aluminium. De préférence, il s'agit d'une pièce réalisée en titane, par exemple une pièce réalisée en alliage Ti-6AI-4V $\alpha\beta$. De plus, l'outil de fraisage 2 correspond à un outil usuel adapté à la réalisation d'opérations de fraisage sur des pièces métalliques, plus particulièrement sur des pièces en titane. Par exemple, il peut s'agir d'une fraise en acier rapide, d'une fraise en carbure monobloc ou à plaquettes carbures, d'une fraise CBN (pour « Cubic Boron Nitride » en anglais), d'une fraise céramique ou encore d'une fraise diamant.

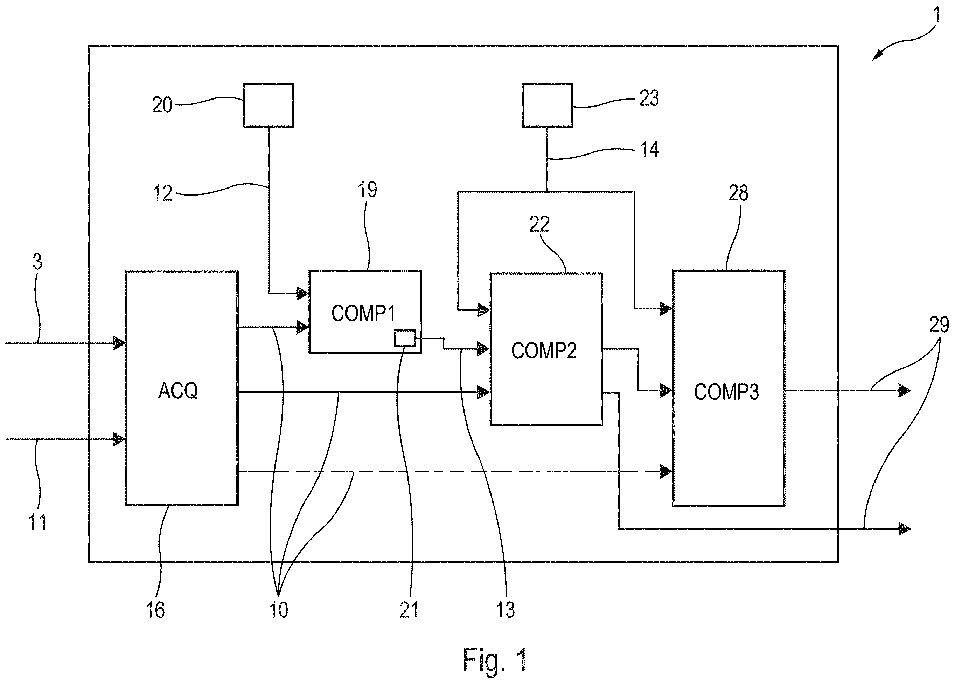

Le dispositif 1, représenté schématiquement sur la figure 1, permet de mettre en oeuvre un procédé P de validation du jeu de paramètres opératoires 3 de la machine-outil, représenté schématiquement sur la figure 2. Comme décrit dans la suite de la description, le dispositif 1 comporte une pluralité d'unités aptes à mettre en oeuvre le procédé P de façon logicielle, par exemple en utilisant des calculateurs usuels de type microprocesseur.

Le procédé P comprend la suite d'étapes E1 à E5 ci-dessous, dont on précisera plus en détail la mise en oeuvre par le dispositif 1 dans la suite de la description. De préférence, ces étapes sont mises en oeuvre de façon successive. Toutefois, dans des modes de réalisation particuliers, l'ordre des étapes peut varier.

Le procédé P comprend, tout d'abord, une étape d'acquisition E1. Cette étape d'acquisition E1 consiste à acquérir un ensemble de données d'entrée 10 comprenant au moins le jeu de paramètres opératoires 3 et à valider un jeu de paramètres additionnels 11 relatif à des caractéristiques de l'outil de fraisage 2 et de la pièce à usiner 4.

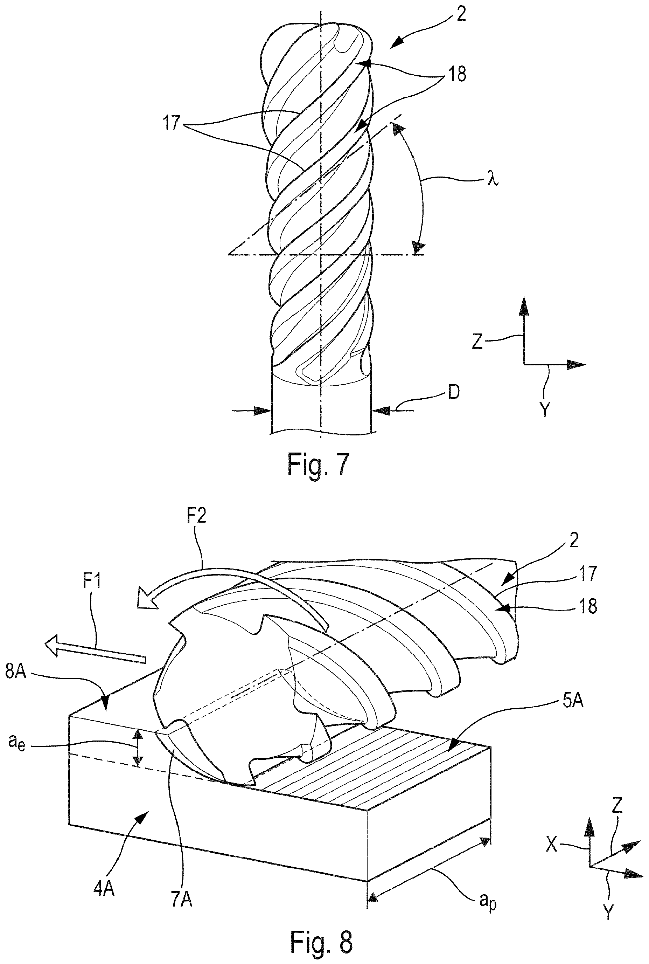

Le procédé P comprend, également, une étape de fraisage E2. Cette étape de fraisage E2 consiste à réaliser, à l'aide de l'outil de fraisage 2, un fraisage de référence de la pièce témoin 4A, représenté sur la figure 8. Ce fraisage de référence permet de mesurer des valeurs d'efforts d'usinage 12 appliqués par l'outil de fraisage 2 sur la pièce témoin 4A.

Le procédé P comprend, de plus, une première étape de traitement de données E3. Cette étape de traitement de données E3, mise en oeuvre après le fraisage de référence, consiste à déterminer des coefficients d'efforts spécifiques 13 représentatifs des efforts d'usinage 12 mesurés à l'étape de fraisage E2. Ces coefficients d'efforts spécifiques sont déterminés à partir d'au moins certaines données de l'ensemble de données d'entrée 10 et des valeurs desdits efforts d'usinage 12. Cette détermination est détaillée dans la suite de la description.

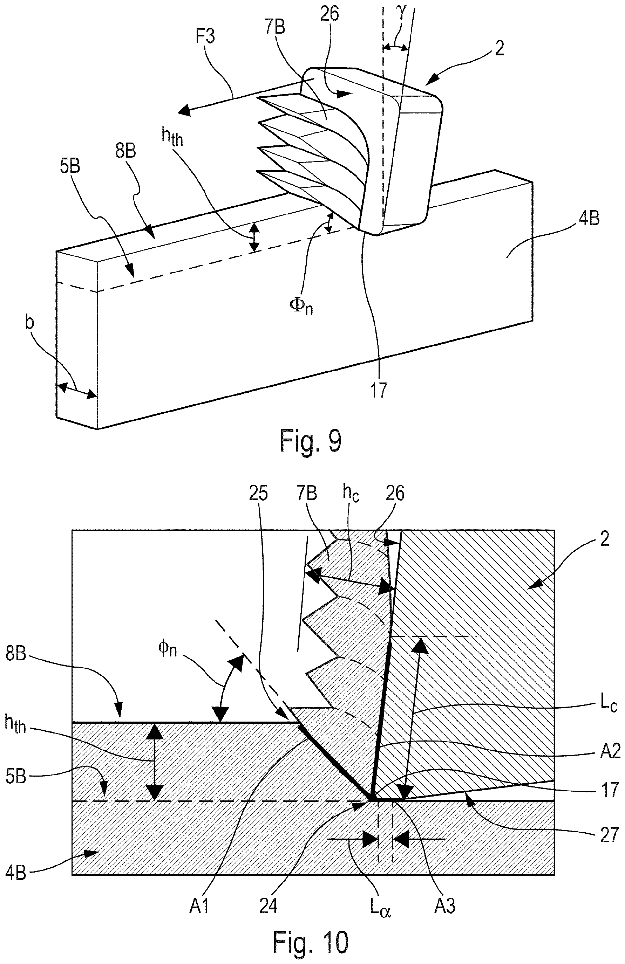

Le procédé P comprend, en outre, une étape de coupe orthogonale E4 représentée de la figure 9 à la figure 11. Cette étape de coupe orthogonale E4 consiste à réaliser, à l'aide de l'outil de fraisage 2, une coupe orthogonale de la pièce témoin 4B. Elle consiste également à mesurer des valeurs de grandeurs géométriques 14 liées à un copeau de référence 7B généré dans la pièce témoin 4B lors de la coupe orthogonale. Ces grandeurs géométriques 14 sont explicitées dans la suite de la description.

Le procédé P comprend, également, une deuxième étape de traitement de données E5. Cette deuxième étape de traitement de données E5, mise en oeuvre après la coupe orthogonale, comprend les sous étapes E51, E52 et E53 suivantes.

Une première sous-étape de calcul E51 consiste à calculer un flux thermique tertiaire $Q_\alpha$ généré dans une zone dite de cisaillement tertiaire A3 de pièce témoin 4B lors de ladite coupe orthogonale. Ce flux thermique tertiaire $Q_\alpha$ est calculé à partir d'au moins certaines données de l'ensemble de données d'entrée 10 et des valeurs des grandeurs géométriques 14 mesurées lors de la coupe orthogonale à l'étape de coupe orthogonale E4. Ce calcul est détaillé dans la suite de la description.

Une deuxième sous-étape de calcul E52 consistant à calculer, à partir du flux thermique tertiaire $Q_\alpha$, une température finale $T_f$. Cette température finale $T_f$ est représentative de la température au niveau d'une surface usinée 5B de la pièce témoin 4B lors de la coupe orthogonale. Par extension, elle est aussi représentative de la température au niveau de la surface usinée 5 de la pièce à usiner 4 lors d'un fraisage. Cette température, qui varie dans le temps, est calculée en fonction du temps de coupe, à savoir le temps pendant lequel l'outil de fraisage 2 usine la pièce témoin 4A. On est alors en mesure d'en extraire la température maximale obtenue au niveau de la surface usinée 5B, qui est la température intéressante à prendre en compte comme critère. Le calcul de la température finale $T_f$ est détaillé dans la suite de la description.

Une sous-étape de comparaison E53 consistant à comparer la température finale $T_f$ à une température critique $T_c$. Cette température critique $T_c$ correspond à une température à partir de laquelle on considère que la santé matière de la pièce à usiner 4 est dégradée si elle est atteinte au niveau de la surface usinée 5. Par exemple, il peut s'agir d'une température à partir de laquelle des contraintes résiduelles commencent à être induites dans la pièce à usiner 4 par un chargement thermique provoqué par un fraisage.

Si la température finale $T_f$ est supérieure ou égale à la température critique $T_c$, alors le jeu de paramètres opératoires 3 est rejeté. Si la température finale $T_f$ est inférieure à la température critique $T_c$, alors le jeu de paramètres opératoires 3 est validé.

Par « validé », on entend que le jeu de paramètres opératoires 3 est considéré comme satisfaisant, à savoir qu'il n'entraîne pas un fraisage néfaste pour la santé matière de la pièce à usiner 4. Par conséquent il est enregistré, par exemple dans une mémoire, de manière à pouvoir être utilisé par la suite.

Par « rejeté », on entend que le jeu de paramètres opératoires 3 est considéré comme insatisfaisant, à savoir qu'il est susceptible d'entraîner un fraisage néfaste pour la santé matière de la pièce à usiner 4. Le jeu de paramètres opératoires 3 peut alors simplement ne pas être enregistré ou bien être enregistré, par exemple dans une mémoire, et référencé comme étant insatisfaisant.

Ainsi, grâce au procédé P on est capable d'estimer de manière simple, rapide et peu coûteuse, la température générée sur la pièce à usiner 4, au niveau de la surface usinée 5, lors d'une opération de fraisage. Cette information permet de valider ou de rejeter le jeu de paramètres opératoires 3 utilisé pour réaliser ladite opération de fraisage en fonction d'un critère simple correspondant à un seuil de température critique à ne pas dépasser. On est alors en mesure d'adapter le jeu de paramètres opératoires 3 de manière à garantir que la santé matière de la pièce à usiner 4 ne soit pas dégradée par l'opération de fraisage tout en maximisant la productivité de ladite opération de fraisage.

Dans un mode de réalisation particulier, le procédé P comporte, de plus, une troisième étape de traitement de données E6, mise en oeuvre après l'étape de traitement de données E5, si la température finale $T_f$ est inférieure à la température critique $T_c$. Dans ce mode de réalisation particulier, on considère que le jeu de paramètres opératoires 3 n'est pas complètement validé après l'étape de traitement de données E5 et qu'il est nécessaire d'estimer plus finement la température obtenue au niveau de la surface usinée 5B. Pour ce faire, elle comprend les sousétapes E61, E62, E63 suivantes qui permettent d'effectuer une estimation plus fine et de réaliser une seconde validation ou un rejet du jeu de paramètres opératoires 3.

Une troisième sous-étape de calcul E61 consiste à calculer un flux thermique primaire $Q_s$ généré dans une zone dite de cisaillement primaire A1 de la pièce témoin 4B et un flux thermique secondaire $Q_\gamma$ généré dans une zone de cisaillement secondaire A2 de la pièce témoin 4B. Ce calcul est réalisé à partir d'au moins certaines données de l'ensemble de données d'entrée 10 et des valeurs des grandeurs géométriques 14 mesurées lors de la coupe orthogonale. Il est détaillé dans la suite de la description.

Une quatrième sous-étape de calcul E62 consiste à calculer, à partir du flux thermique primaire $Q_s$ et du flux thermique secondaire $Q_\gamma$, une température totale $T_t$ représentative de la température maximale au niveau d'une surface usinée 5B de la pièce témoin 4B lors de la coupe orthogonale. Cette température totale $T_t$ correspond à une estimation plus fine de la température au niveau de la surface usinée 5B puisque son calcul prend en compte, en plus du flux thermique tertiaire $Q_\alpha$, le flux thermique primaire $Q_s$ et le flux thermique secondaire $Q_\gamma$. Ce calcul est détaillé dans la suite de la description.

Une sous-étape de comparaison E63 consiste à comparer la température totale $T_t$ à la température critique $T_c$. Si la température totale $T_t$ est supérieure ou égale à la température critique $T_c$, alors le jeu de paramètres opératoires 3 est rejeté. Si la température totale $T_t$ est inférieure à la température critique $T_c$, alors le jeu de paramètres opératoires 3 est validé.

Le dispositif 1, comporte une unité d'acquisition 16 (notée ACQ sur la figure 1, pour « acquisition unit » en anglais) permettant de mettre en oeuvre l'étape d'acquisition E1. Il peut s'agir d'éléments usuels (non représentés) permettant à un opérateur de renseigner des données, par exemple un clavier et un écran d'affichage ou un écran tactile. Cette unité d'acquisition 16 est configurée pour recevoir l'ensemble de données d'entrée 10 qui comprend le jeu de paramètres opératoires 3 à valider et le jeu de paramètres additionnels 11.

De manière non limitative, le jeu de paramètres opératoires 3 peut comprendre les paramètres suivants, liés à la cinématique de l'outil de fraisage 2 :

- une vitesse d'avance F de l'outil de fraisage 2 ;
- une fréquence de rotation S de l'outil de fraisage 2 ;
- une vitesse de coupe $v_c$ de l'outil de fraisage 2 ;
- une avance par dent $f_z$ de l'outil de fraisage 2 ;
- un engagement radial $a_e$ de l'outil de fraisage 2 ; et
- un engagement axial $a_p$ de l'outil de fraisage 2.

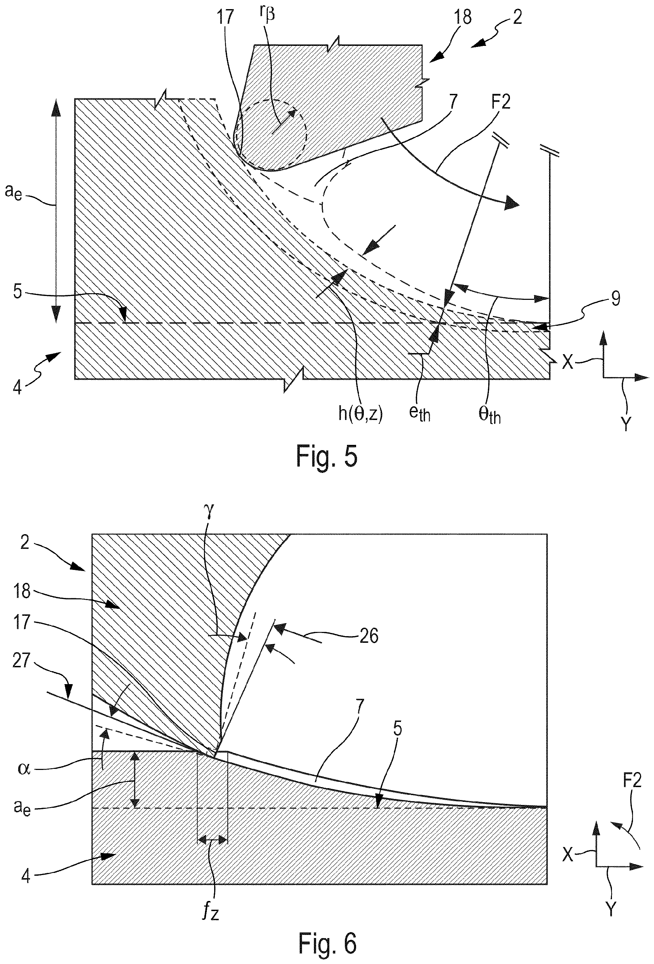

Toujours de manière non limitative, le jeu de paramètres opératoires 3 peut comprendre les paramètres suivants, liés à la géométrie de l'outil de fraisage 2 et à des arêtes de coupe 17 de dents 18 dont l'outil de fraisage 2 est pourvu (figure 6 et figure 7) :

- un diamètre $D$ de l'outil de fraisage 2 ;
- un nombre de dents de l'outil de fraisage 2 ;
- un angle d'hélice $\lambda$ de l'outil de fraisage 2 ;
- un angle de coupe $\gamma$ des arêtes de coupe 17 de l'outil de fraisage 2 ;
- un angle de dépouille $\alpha$ des arêtes de coupe 17 de l'outil de fraisage 2 ;
- un rayon d'acuité $r_\beta$ des arêtes de coupe 17 de l'outil de fraisage 2 ; et
- une usure en dépouille des arêtes de coupe 17 de l'outil de fraisage 2.

Par ailleurs, l'ensemble de données d'entrée 10 comprend également le jeu de paramètres additionnels 11 correspondant à des données préenregistrées nécessaires pour les calculs que le dispositif 1 doit réaliser. Par exemple, il peut s'agir de paramètres intrinsèques à l'outil de fraisage 2 et à la pièce à usiner 4, comme des caractéristiques liées à leurs matériaux. Bien que ces paramètres additionnels 11 soient à prendre en compte pour quantifier les effets du fraisage sur la pièce à usiner 4, ils sont non modifiables. De manière non limitative, les paramètres additionnels 11 peuvent comprendre :

- une conductivité thermique $\lambda_t$ de l'outil de fraisage 2 ;
- une capacité thermique massique $c_{p,t}$ de l'outil de fraisage 2 ;
- une masse volumique $\rho_t$ de l'outil de fraisage 2 ;
- une conductivité thermique $\lambda_w$ de la pièce à usiner 4 ;
- une capacité thermique massique $c_{p,w}$ de la pièce à usiner 4 ; et
- une masse volumique $\rho_w$ de la pièce à usiner 4.

L'unité d'acquisition 16 est apte à fournir au moins certaines données de l'ensemble de données d'entrée 10 à d'autres unités du dispositif 1 pour leur permettre de réaliser des calculs utilisant ces données.

En outre, le dispositif 1 comporte également une première unité de traitement de données 19 (notée COMP1 sur la figure 1, pour « computation unit » en anglais) apte à mettre en oeuvre l'étape de traitement de données E3 qui a lieu après l'étape de fraisage E2. L'unité de traitement de données 19 est configurée pour déterminer les coefficients d'efforts spécifiques 13 représentatifs des efforts d'usinage 12 appliqués sur la pièce témoin 4A lors du fraisage de référence (figure 8) réalisé lors de l'étape de fraisage E2.

Dans un mode de réalisation préféré, l'unité de traitement de données 19 est configurée pour déterminer les coefficients d'efforts spécifiques 13 en intégrant des résultats expérimentaux dans des expressions théoriques déterminés analytiquement. En effet, d'une part les efforts d'usinage 12 sont mesurés expérimentalement lors du fraisage de référence de l'étape de fraisage E2, et d'autre part, des efforts d'usinage théoriques sont obtenus par calculs analytiques comme expliqué ci-dessous.

Le fraisage de référence, représenté schématiquement sur la figure 8, correspond à une opération d'usinage usuelle de la pièce témoin 4A avec le jeu de paramètres opératoires 3. Il consiste à usiner une face 8A de la pièce témoin 4A à l'aide de l'outil de fraisage 2 de manière à obtenir une surface usinée 5A. L'avance de l'outil de fraisage 2 est illustrée par une flèche F1 et sa rotation est illustré par une flèche F2.

Lors de ce fraisage de référence, on mesure les valeurs des efforts d'usinage 12 appliqués par l'outil de fraisage 2 sur la pièce témoin 4A. Ces valeurs peuvent être stockées dans une base de données (non représentée) de manière à pouvoir y avoir accès par la suite.

Comme représenté schématiquement sur la figure 1, le dispositif 1 comporte une platine dynamométrique 20 apte à mesurer les valeurs des efforts d'usinage 12 lors du fraisage de référence. Dans d'autres modes de réalisation, le dispositif 1 peut comporter d'autres outils de mesure aptes à réaliser lesdites mesures des valeurs d'efforts d'usinage 12.

Trois efforts d'usinage 12 (Fx, Fy et Fz ) sont mesurés selon les directions respectives de trois axes x, y et z représentés sur la figure 8 et formant un repère orthogonal R(x, y, z) comme suit :

- l'axe x est orienté perpendiculairement à la surface usinée 5A de la pièce témoin 4A ;
- l'axe y est orienté selon la direction de l'avance de l'outil de de fraisage 2 (flèche F1) ; et
- l'axe z est orienté selon l'axe de rotation de l'outil de fraisage 2 (flèche F2).

En outre, l'unité de traitement de données 19 est configurée pour déterminer des efforts d'usinage théoriques correspondant à une estimation analytique des efforts d'usinage 12 mesurés expérimentalement. Dans un mode de réalisation particulier, cette estimation correspond à la mise en oeuvre d'une sous-étape de calcul analytique E31 de l'étape de traitement de données E3 telle que détaillée ci-dessous.

Dans ce mode de réalisation particulier, l'unité de traitement de données 19 comprend un modèle cinématique permettant d'établir des expressions mathématiques des efforts d'usinage théoriques à déterminer. Ces expressions sont obtenues à partir de données de l'ensemble de données d'entrée 10 et d'autres données calculées par l'unité de traitement de donnée 19. Elles définissent des relations entre les efforts d'usinage théoriques et les coefficients d'efforts spécifiques 13 que l'on souhaite déterminer.

Le modèle cinématique du fraisage de référence est construit en isolant analytiquement le travail de chacune des dents 18 de l'outil de fraisage 2. De cette manière, on peut déterminer des efforts locaux (pour chacune des dents 18), puis des efforts globaux (somme des efforts locaux). Ceci permet d'appliquer la notion d'efforts spécifiques et ainsi de faire apparaître des relations impliquant les coefficients d'efforts spécifiques 13.

Pour ce faire, il convient de calculer une épaisseur non coupée d'un copeau 7A produit par l'outil de fraisage 2 lors du fraisage de référence. Ce copeau 7A correspond à un copeau coupé par l'une des dents 18 de l'outil de fraisage 2 pendant un tour de ce dernier. De manière générale, comme représenté de la figure 3 à la figure 5, lors d'un fraisage l'épaisseur du copeau coupé par une dent (notée h(θ, z) sur la figure 5) varie en fonction de la position axiale selon l'axe z (notée z) et de la position angulaire autour de l'axe z (notée θ). Ainsi, lors du fraisage de référence, pour chaque dent 18 (notée avec l'indice j) une épaisseur non coupée $h_j$ du copeau 7A est définie par l'équation suivante :

$$h_j(\theta, z) = f_z \sin \theta_j(z)$$

dans laquelle :

- j est un entier compris entre 1 et N (N étant le nombre de dents 18 de l'outil de fraisage 2) ;
- $f_z$ est l'avance par dent de l'outil de fraisage 2 (issu de l'ensemble de données d'entrée 10) ; et
- $\theta_j(z)$ est la position angulaire de la j-ème dent 18, à une altitude notée z.

Pour calculer $\theta_j(z)$, une méthode de discrétisation usuelle est utilisée de manière à discrétiser l'outil de fraisage 2 en un nombre entier de disques élémentaires (noté $N_z$). La position moyenne suivant l'axe z est alors définie par l'équation suivante :

$$z(k) = (k - 1)dz + \frac{dz}{2}$$

dans laquelle k est un entier compris entre 1 et $N_z$.

La position angulaire de la j-ème dent 18 $\theta_j(z)$ peut ainsi être calculée par l'équation suivante :

$$\theta_j(z) = \theta + (j - 1)\theta_p - \left((k - 1)dz + \frac{dz}{2}\right)\frac{\tan \lambda}{R}$$

dans laquelle :

- θ est la position angulaire de l'outil de fraisage 2, variant de 0 à $2\pi$ ;
- $\theta_p$ est l'angle entre deux dents 18 consécutives tel que $\theta_p = \frac{2\pi}{N}$ où N est le nombre de dents 18 ;
- λ est l'angle d'hélice de l'outil de fraisage 2 (issu de l'ensemble de données d'entrée 10) ; et
- R est le rayon de l'outil de fraisage 2 (issu de l'ensemble de données d'entrée 10).

Des efforts élémentaires locaux (les efforts tangentiels sont notés *dFt,* les efforts radiaux sont notés *dFr* et les efforts axiaux sont notés *dFa*) peuvent alors être exprimés par les équations suivantes, faisant intervenir les coefficients d'efforts spécifiques 13 :

$$\begin{cases} dFt_j = \left[Kt_c\, h_j\left(\theta_j(z)\right) + Kt_e\right] dz \\ dFr_j = \left[Kr_c\, h_j\left(\theta_j(z)\right) + Kr_e\right] dz \\ dFa_j = \left[Ka_c\, h_j\left(\theta_j(z)\right) + Ka_e\right] dz \end{cases}$$

dans lesquelles :

- $Kt_c$ est le coefficient d'effort spécifique de coupe tangentiel ;
- $Kr_c$ est le coefficient d'effort spécifique de coupe radial ;
- $Ka_c$ est le coefficient d'effort spécifique de coupe axial ;
- $Kt_e$ est le coefficient d'effort spécifique d'arête tangentiel ;
- $Kr_e$ est le coefficient d'effort spécifique d'arête radial ; et
- $Ka_e$ est le coefficient d'effort spécifique d'arête axial.

Ces efforts locaux sont exprimés par rapport à l'outil de fraisage 2, donc dans un repère tournant. Ils peuvent être exprimés dans le repère orthogonal R(x, y, z) (les efforts selon l'axe x étant notés dFx, les efforts selon l'axe y étant notés dFy et les efforts selon l'axe z étant notés dFz) par les équations suivantes :

$$\begin{cases} dFx_j = -dFt_j \cos\theta_j(z) - dFr_j \sin\theta_j(z) \\ dFy_j = +dFt_j \sin\theta_j(z) - dFr_j \cos\theta_j(z) \\ \qquad\quad dFz_j = +dFa_j \end{cases}$$

En sommant ces efforts élémentaires (sur la totalité de l'outil de fraisage 2), on est capable d'obtenir les efforts globaux. On obtient alors la relation souhaitée liant les efforts d'usinage théoriques aux coefficients d'usinage spécifiques 13. Grâce à la connaissance des efforts d'usinage 12 mesurés lors du fraisage de référence, on est ensuite en mesure d'identifier chacun des coefficients d'efforts spécifiques 13.

Pour ce faire, l'unité de traitement de donnée 19 met en oeuvre une sous-étape d'identification E32 de l'étape de traitement de données E3. Notamment, l'unité de traitement de données 19 est configurée pour identifier les coefficients d'efforts spécifiques 13 en minimisant l'écart entre les valeurs des efforts d'usinage 12, qui ont été préalablement mesurées, et les valeurs données par les efforts d'usinage théoriques.

De plus, le dispositif 1 comporte une mémoire 21 dans laquelle les coefficients d'efforts spécifiques 13 ainsi identifiés sont stockés de manière à pourvoir être utilisés par la suite.

De préférence, l'unité de traitement de données 19 est configurée pour réaliser l'identification des coefficients d'efforts spécifiques 13 en utilisant la méthode des moindres carrés. Toutefois, cette identification peut être réalisée par d'autres méthodes de régression usuelles.

Par ailleurs, le dispositif 1 comporte une deuxième unité de traitement de données 22 (notée COMP2 sur la figure 1) apte à mettre en oeuvre l'étape de traitement de données E5. L'unité de traitement de données 22 est configurée pour calculer la température finale $T_f$ à partir de laquelle il est possible de déterminer si le jeu de paramètres opératoires 3 doit être validé ou rejeté. La température finale $T_f$ est obtenue à partir des valeurs expérimentales, des coefficients d'efforts spécifiques et de données calculées par l'unité de traitement de données 22, comme détaillé ci-après. En effet, les grandeurs géométriques 14 sont mesurées expérimentalement à l'étape de coupe orthogonale E4 et les coefficients d'efforts spécifiques sont transmis à l'unité de traitement de données 22 par la mémoire 21.

La coupe orthogonale, représentée de la figure 9 à la figure 11, correspond à une coupe de la pièce témoin 4B dans une configuration particulière où l'arête de coupe 17 de l'outil de fraisage 2 est rectiligne et perpendiculaire à la direction donnée par l'avance dudit outil de fraisage 2. La direction d'avance de l'outil de fraisage 2 est représentée par une flèche F3 sur la figure 9. Cette coupe orthogonale consiste à usiner la pièce témoin 4B au niveau d'une face 8B de manière à obtenir la surface usinée 5B. L'objectif de la coupe orthogonale est de couper le copeau de référence 7B servant d'échantillon expérimental sur lequel on réalise les mesures de grandeurs géométriques 14.

Comme représenté schématiquement sur la figure 1, le dispositif 1 comporte une unité de mesure 23 configurée pour mesurer les valeurs des grandeurs géométriques 14, liées au copeau de référence 7B, lors de la coupe orthogonale. Ces valeurs peuvent être enregistrées dans une mémoire (non représentée) de manière à pouvoir être utilisées par la suite. De préférence, l'unité de mesure 23 est apte à réaliser des mesures de type optique. Toutefois, dans d'autres modes de réalisation, l'unité de mesure 23 peut être apte à réaliser des mesures d'autres types. Par ailleurs, ces mesures peuvent être réalisées en direct pendant la coupe orthogonale ou après cette dernière.

Le contact de l'outil de fraisage 2 avec une face 8B de la pièce témoin 4B provoque une forte compression de la matière générant un cisaillement à l'origine de la formation du copeau de référence 7B. Ce cisaillement se produit dans une zone de cisaillement primaire A1 définie entre une pointe 24 de l'outil de fraisage 2 et une surface externe 25 du copeau de référence 7B (figure 10). Le copeau de référence 7B ainsi formé frotte sur une face de coupe 26 de l'outil de fraisage 2 au niveau d'une zone de cisaillement secondaire A2. Une face en dépouille 27 de l'outil de fraisage 2 frotte, au moins partiellement, contre la surface usinée 5B de la pièce témoin 4B au niveau d'une zone de cisaillement tertiaire A3.

Dans un mode de réalisation préféré, les grandeurs géométriques 14 mesurées par l'unité de mesure 23 comprennent les grandeurs suivantes, représentées sur la figure 10 :

- un angle d'inclinaison de plan de cisaillement primaire $\Phi_n$ ;
- une longueur de contact de copeau sur la face de coupe $L_c$ ;
- une longueur de contact en dépouille $L_\alpha$ ; et
- une épaisseur moyenne de copeau coupé $h_c$.

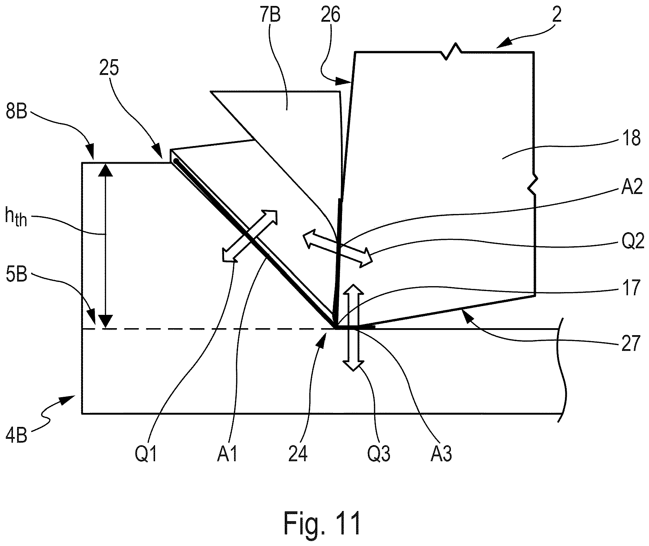

Par ailleurs, l'unité de traitement de données 22 apte à mettre en oeuvre la sous-étape de calcul E51. Elle est configurée pour calculer le flux thermique tertiaire $Q_\alpha$ (figure 11) généré lors de la coupe orthogonale dans la zone de cisaillement tertiaire A3. Pour ce faire, l'unité de traitement de données 22 utilise des données de l'ensemble de données d'entrée 10 des valeurs des grandeurs géométriques 14 mesurées lors de la coupe orthogonale. Le flux thermique tertiaire $Q_\alpha$ est défini par l'équation suivante :

$$Q_\alpha = \frac{P_\alpha}{b.L_\alpha}$$

dans laquelle :

- $P_\alpha$ est la puissance générée par frottement au niveau de la face de dépouille 27 de l'outil de fraisage 2 (avec $P_\alpha = K_{te}.b.v_c$) ;
- b est la largeur de la pièce témoin 4B (à savoir sa dimension selon l'axe z) ; et
- $L_\alpha$ est la longueur de contact en dépouille.

De plus, l'unité de traitement de données 22 est apte à mettre en oeuvre la sous-étape de calcul E52. Elle est configurée pour calculer la température finale $T_f$ générée par l'outil de fraisage 2 au niveau de la surface usinée 5B. Dans un mode de réalisation particulier, on considère que la température finale $T_f$ est générée uniquement par le flux thermique tertiaire $Q_\alpha$.

La température finale $T_f$ peut être calculée en appliquant le principe de continuité, au niveau de l'interface entre l'outil de fraisage 2 et la surface usinée 5B, entre une température $T_{outil}$ dudit outil de fraisage 2 et une température $T_{surf}$ de ladite surface usinée 5B.

La température $T_{outil}$ est définie par l'équation suivante :

$$T_{outil}(x, t_c) = T_{amb}$$
$$+ \frac{Q_\alpha.\sqrt{\alpha_t t_c}}{\lambda\sqrt{\pi}} \left\{ - erf\left(\frac{(a+x)}{2\sqrt{\alpha_t.t_c}}\right) \right.$$
$$\left. + erf\left(\frac{(x-a)}{2\sqrt{\alpha_t.t_c}}\right) - \frac{(a+x)}{2\sqrt{\alpha_t.t_c}} ei\left(\frac{(a+x)^2}{4\alpha_t.t_c}\right) + \frac{(x-a)}{2\sqrt{\alpha_t.t_c}} ei\left(\frac{(x-a)^2}{4\alpha_t.t_c}\right) \right\}$$

dans laquelle :

- $x$ est la position selon l'axe x ;

- $t_c$ est le temps de l'arête de coupe en matière tel que $t_c = \frac{L_{ch}}{v_c}$ ;

- $L_{ch}$ est la longueur du copeau de référence 7B telle que $L_{ch} = R\,a\cos\left(1 - \frac{a_e}{R}\right)$ ;
- $T_{amb}$ est la température ambiante ;
- $\alpha_t$ est la diffusivité thermique du matériau de l'outil de fraisage 2 ;

- $a$ est la demi longueur de contact en dépouille ( $a = \frac{L_\alpha}{2}$ ) ; et

- $ei$ est la fonction exponentielle intégrale telle que $ei(x) = \int_{-\infty}^{x}\frac{e^t}{t}dt$ .

On peut alors calculer une température moyenne comme suit :

$$T_{outil}^{moy}(t_c) = \int_{-a}^{a}\frac{T_{outil}(x, t_c)}{L_\alpha}\,\mathrm{d}x$$

Par ailleurs, la température $T_{surf}$ est définie par l'équation suivante :

$$T_{surf} = T_{amb} + 2.\frac{Q_\alpha}{\pi.\,v_c.\,\rho.\,c_{p,w}}.\left\{(X+L)e^{-(X+L)}\left[K_0\left((X+L)e^{-(X+L)}\right)\right.\right.$$
$$\left.- K_1\left((X+L)e^{-(X+L)}\right)\right]$$
$$\left.- (X-L)e^{-(X-L)}\left[K_0\left((X-L)e^{-(X-L)}\right) - K_1\left((X-L)e^{-(X-L)}\right)\right]\right\}$$

dans laquelle :

- $K_0$ et $K_1$ sont des coefficients prédéterminés ;
- $X = \frac{v_c.x}{2\alpha_w}$ ;
- $L = \frac{v_c.a}{2\alpha_w}$ ; et
- $\alpha_w$ est la diffusivité thermique du matériau de la pièce témoin 4B.

On peut alors calculer une température moyenne comme suit :

$$T_{surf}^{moy}(t_c) = \int_{-a}^{a}\frac{T_{surf}(x)}{L_\alpha}\,\mathrm{d}x$$

La condition de continuité entre la température $T_{outil}$ et la température $T_{surf}$ se traduit par l'égalité desdites températures $T_{outil}$ et $T_{surf}$. Si on transpose cette égalité en termes de flux thermiques absorbés par l'outil de fraisage 2 et par la surface usinée 5B, on obtient l'équation suivante :

$$T_{outil} = T_{surface} = a^*.\,Q_{outil} = b^* \cdot Q_{surf}$$

dans laquelle :

- $$a^*(t) = \frac{1}{Q_\alpha} \int_{-a}^{a} \frac{T_{surf}}{2a} dx \quad ;$$

- $$b^*(t) = \frac{1}{Q_\alpha} \int_{-a}^{a} \frac{T_{outil}}{2a} dx \quad ;$$

- $Q_{surf} = \eta_{surf}.Q_\alpha$ ;
- $Q_{outil} = \eta_{outil}.Q_\alpha$ ;
- $\eta_{surf} = 1 - \eta_{outil}$ ; et

- $$\eta_{outil} = \frac{a^*}{a^*+b^*} \quad .$$

L'unité de traitement de données 22 est ainsi en mesure de calculer la température finale qui est définie par l'équation suivante :

$$T_f = a^*.Q_{surf}$$

En outre, l'unité de traitement de données 22 est également apte à comparer la température finale $T_f$ à la température critique $T_c$ et à décider si le jeu de paramètres opératoires 3 doit être validé ou rejeté. Si la température finale $T_f$ est supérieure ou égale à la température critique $T_c$, alors le jeu de paramètres opératoires 3 est rejeté. Si la température finale $T_f$ est inférieure à la température critique $T_c$, alors le jeu de paramètres opératoires 3 est validé.

Dans un mode de réalisation particulier, le dispositif 1 comporte, de plus, une troisième unité de traitement de données 28 (notée COMP3 sur la figure 1) apte à mettre en oeuvre l'étape de traitement de données E6. L'unité de traitement de données 28 est configurée pour calculer la température totale $T_t$ qui correspond à la température au niveau de la surface usinée 5B de la pièce témoin 4B lors de la coupe orthogonale. Ce calcul de la température totale $T_t$ prend en compte, en plus de la contribution du flux thermique tertiaire $Q_\alpha$, les contributions du flux thermique primaire $Q_s$ et du flux thermique secondaire $Q_\gamma$. Les contributions des différents flux thermiques sont représentées sur la figure 11 par des flèches Q1 (pour le flux thermique primaire $Q_s$), Q2 (pour le flux thermique secondaire $Q_\gamma$) et Q3 (pour le flux thermique tertiaire $Q_\alpha$) illustrant des diffusions de chaleur.

L'unité de traitement de données 28 est configurée pour calculer le flux thermique primaire $Q_s$ généré dans la zone de cisaillement primaire A1 et le flux thermique secondaire $Q_\gamma$ généré dans une zone de cisaillement secondaire A2 lors de la coupe orthogonale. Ce calcul est réalisé à partir de certaines données de l'ensemble de données d'entrée 10 et des valeurs des grandeurs géométriques 14 mesurées lors de la coupe orthogonale.

Le flux thermique primaire $Q_s$ est défini par l'équation suivante :

$$Q_s = \frac{P_s}{A_s}$$

dans laquelle :

- $P_s$ est la puissance sur le plan de cisaillement primaire A1 tel que $P_s = F_s.v_s$ ;
- $F_s$ est l'effort de cisaillement sur le plan de cisaillement primaire tel que $F_s = Ft_c.\cos \Phi_n - Fr_c.\sin \Phi_n$ ;

$$v_s = v_c.\frac{\cos\gamma}{\cos(\Phi_n-\gamma)} \quad ;$$

- $v_s$ est la vitesse de cisaillement dans le plan de cisaillement primaire A1, telle que $\cos\gamma$
- $Ft_c$ est l'effort de coupe tangentiel tel que $Ft_c = b.Kt_c.h_{th}$ ;
- $Fr_c$ est l'effort de coupe radial tel que $Fr_c = b.Kr_c.h_{th}$ ; et
- $h_{th}$ est une épaisseur de copeau non coupé thermique.

L'épaisseur de copeau non coupé thermique $h_{th}$, représentée sur la figure 4, correspond à la valeur de l'épaisseur de copeau non coupé telle que la dent de l'outil de fraisage 2, en train de couper ledit copeau, se situe dans un secteur angulaire thermique. Ce secteur angulaire thermique, d'angle thermique $\theta_{th}$, correspond à la plage angulaire pour laquelle l'outil de fraisage 2 affecte thermiquement la surface usinée 5 de la pièce à usiner 4. Le secteur angulaire thermique concerne uniquement la dernière partie de la plage angulaire où la dent de l'outil de fraisage 2 usine la pièce à usiner 4.

L'épaisseur de copeau non coupé thermique est définie par l'équation suivante :

$$h_{th} = R + f_z \sin\theta_{th} - \sqrt{R^2 - (f_z \cos\theta_{th})^2}$$

dans laquelle :

$$\theta_{th} = asin\left(\frac{\sqrt{e_{th}} \cdot \sqrt{e_{th}+2R}}{R+e_{th}}\right) \;;$$

- $\theta_{th}$ est l'angle thermique tel que
- $e_{th}$ est l'épaisseur de l'information thermique transmise au niveau de la surface usinée 5 telle que

$$e_{th} = \sqrt{\alpha_w \cdot t_c} \;.$$

En outre, le flux thermique secondaire $Q_\gamma$ est défini par l'équation suivante :

$$Q_\gamma = \frac{P_\gamma}{b.\,L_c}$$

dans laquelle :

- $P_\gamma$ est la puissance de frottement sur la face de coupe 26 de l'outil de fraisage 2 telle que $P_\gamma = Ft_\gamma.v_{ch}$ ;
- $Ft_\gamma$ est l'effort tangentiel sur la face de coupe 26 tel que
  $Ft_\gamma = Ft_c.\sin\gamma_n + FT_c.\cos\gamma_n$ ;
- $Ft_c$ est l'effort de coupe tangentiel tel que $Ft_c = b.Kt_c.h_{th}$ ;
- $Fr_c$ est l'effort de coupe radial tel que $Fr_c = b.Kr_c.h_{th}$ ; et
- $v_{ch}$ est la vitesse moyenne du copeau sur la face de coupe 26 telle que

$$v_{ch} = v_c.\frac{h_{th}}{h_c}.$$

L'unité de traitement de données 28 est également configurée pour calculer la température totale $T_t$ en prenant en compte les contributions du flux thermique primaire $Q_s$ et du flux thermique secondaire $Q_\gamma$. Pour prendre en compte ces contributions, elle est apte à calculer la température, respectivement dans le plan de cisaillement primaire et dans le plan de cisaillement secondaire, et à appliquer, par addition, une portion de ces températures à la température finale $T_f$, précédemment calculée par l'unité de traitement de données 22.

Par exemple, on peut calculer la température dans le plan de cisaillement primaire à l'aide de l'équation suivante :

$$T_s = T_{amb} + \eta.\left(\frac{P_s}{b.\,h_{th}.\,v_c.\,\rho_w.\,c_{p,w}(T_{amb})}\right)$$

dans laquelle $\eta$ est une valeur connue représentant la proportion de puissance plastique transformée en chaleur.

Et on peut calculer la portion de cette chaleur s'exerçant sur la surface usinée 5B à l'aide de l'équation suivante :

$$p = 1 - \left(\frac{1}{1 + 1.328\left(\frac{\alpha_w.\gamma_s}{v_c.h_{th}}\right)}\right)$$

dans laquelle $\gamma_s$ est la déformation moyenne dans le plan de cisaillement primaire A1, telle que

$$\gamma_S = \frac{cos\,\gamma}{sin\,\Phi_n\,cos(\Phi_n - \gamma)}\,.$$

Un raisonnement similaire est appliqué pour calculer la contribution du flux thermique secondaire $Q_\gamma$.

En outre, l'unité de traitement de données 28 est configurée pour comparer la température totale $T_t$ à la température critique $T_c$. Si la température totale $T_t$ est supérieure ou égale à la température critique $T_c$, alors le jeu de paramètres opératoires 3 est rejeté. Si la température totale $T_t$ est inférieure à la température critique $T_c$, alors le jeu de paramètres opératoires 3 est validé.

L'unité de traitement de données 22 et l'unité de traitement de données 28 sont configurées pour transmettre un ensemble de données de sortie 29 à un dispositif (non représenté) prévu pour le recevoir. Il peut s'agir simplement d'une valeur de type binaire indiquant si le jeu de paramètres opératoires 3 est validé ou rejeté, par exemple via un écran d'affichage pour un opérateur. Il peut également s'agir de données comprenant, par exemple, en plus de la valeur indiquant si le jeu de paramètres opératoires 3 est validé ou rejeté, le jeu de paramètres opératoires 3, la température finale $T_f$ et/ou la température totale $T_t$. L'ensemble de données de sortie 29 peut ainsi être traité automatiquement par une unité de traitement prévue à cet effet, ou manuellement par un opérateur.

Dans un exemple d'application du dispositif 1, le procédé P est mis en oeuvre de manière à déterminer un jeu de paramètres opératoires fonctionnel, à savoir un jeu de paramètres opératoires qui est validé par ledit procédé P. Toutefois, il peut également être mis en oeuvre de manière à optimiser une opération d'usinage en trouvant le meilleur jeu de paramètres opératoires 3, à savoir celui qui maximise la santé matière de la pièce à usiner 4 et la productivité de ladite opération d'usinage. Cette optimisation peut être réalisée en mettant en oeuvre le procédé P de manière itérative, en changeant au moins un paramètre du jeu de paramètres opératoires 3 à chaque itération, et ceci jusqu'à obtenir une opération d'usinage souhaitée. Cette itération peut être réalisée manuellement par un opérateur ou automatiquement par un algorithme prévu à cet effet.

Le procédé P, mis en oeuvre par le dispositif 1 tel que décrit ci-dessus, présente de nombreux avantages. En particulier :

- il permet d'estimer facilement et rapidement la température maximale générée sur la pièce à usiner 4 au niveau de la surface usinée 5 ;
- il permet de déterminer facilement et rapidement si le jeu de paramètres opératoires 3 doit être validé ou rejeté en fonction d'un critère simple ;
- il permet de savoir s'il faut adapter le jeu de paramètres opératoires 3 de manière à pouvoir maximiser la santé matière de la pièce à usiner 4 ; et
- il permet de savoir s'il faut adapter le jeu de paramètres opératoire 3 de manière à pouvoir maximiser la productivité d'une opération de fraisage.

**Revendications**

1. Procédé de validation d'un jeu de paramètres opératoires d'une machine-outil, ladite machine-outil comportant un outil de fraisage (2) et étant destinée à réaliser un fraisage d'une pièce à usiner (4),
**caractérisé en ce qu'**il comporte au moins la suite d'étapes suivante :

   - une étape d'acquisition (E1) consistant à acquérir un ensemble de données d'entrée (10) comprenant au moins :

      • un jeu de paramètres opératoires (3) à valider, comportant des paramètres liés à la machine-outil et des paramètres liés à l'outil de fraisage (2) ; et
      • un jeu de paramètres additionnels (11) relatif à des caractéristiques de l'outil de fraisage (2) et de la pièce à usiner (4) ;

   - une étape de fraisage (E2) consistant à réaliser, à l'aide de l'outil de fraisage (2), au moins un fraisage de référence d'une première pièce témoin (4A), représentative de la pièce à usiner (4), et à mesurer des valeurs d'efforts d'usinage (12) appliqués par ledit outil de fraisage (2) sur ladite première pièce témoin (4A) ;
   - une première étape de traitement de données (E3) consistant à déterminer, à partir d'au moins certaines données de l'ensemble de données d'entrée (10) et des valeurs d'efforts d'usinage (12) mesurées à l'étape de fraisage (E2), des coefficients d'efforts spécifiques (13) représentatifs desdits efforts d'usinage (12) ;
   - une étape de coupe orthogonale (E4) consistant à réaliser, à l'aide de l'outil de fraisage (2), au moins une coupe orthogonale d'une seconde pièce témoin (4B), représentative de la pièce à usiner (4), et à mesurer au moins des valeurs de grandeurs géométriques (14) liées à un copeau de référence (7B) généré lors de ladite coupe orthogonale ; et
- une deuxième étape de traitement de données (E5) comprenant au moins :

• une première sous-étape de calcul (E51) consistant à calculer, à partir d'au moins certaines données de l'ensemble de données d'entrée (10), d'au moins l'un des coefficients d'efforts spécifiques (13) et des valeurs des grandeurs géométriques (14) mesurées à l'étape de coupe orthogonale (E4), un flux thermique dit tertiaire ($Q_\alpha$) généré dans une zone dite de cisaillement tertiaire (A3) de la seconde pièce témoin (4B) lors de ladite coupe orthogonale ;
• une deuxième sous-étape de calcul (E52) consistant à calculer, à partir du flux thermique tertiaire ($Q_\alpha$), une température dite finale ($T_f$) représentative de la température maximale au niveau d'une surface usinée (5B) de la seconde pièce témoin (4B) lors de la coupe orthogonale ; et
• une sous-étape de comparaison (E53) consistant à comparer la température finale ($T_f$) à une température dite critique ($T_c$) et à :

○ rejeter le jeu de paramètres opératoires (3) si la température finale ($T_f$) est supérieure ou égale à la température critique ($T_c$) ; et
○ valider le jeu de paramètres opératoires (3) si la température finale ($T_f$) est inférieure à la température critique ($T_c$).

2. Procédé selon la revendication 1,
**caractérisé en ce que** le jeu de paramètres opératoires (3) comprend au moins certains des paramètres opérationnels suivants :

- une vitesse d'avance de l'outil de fraisage (2) ;
- une fréquence de rotation de l'outil de fraisage (2) ;
- une vitesse de coupe ($v_c$) de l'outil de fraisage (2) ;
- une avance par dent ($f_z$) de l'outil de fraisage (2) ;
- un engagement radial ($a_e$) de l'outil de fraisage (2) ;
- un engagement axial ($a_p$) de l'outil de fraisage (2) ;
- un diamètre ($D$) de l'outil de fraisage (2) ;
- un nombre de dents de l'outil de fraisage (2) ;
- un angle d'hélice ($\lambda$) de l'outil de fraisage (2) ;
- un angle de coupe ($\gamma$) d'arêtes de coupe (17) de l'outil de fraisage (2) ;
- un angle de dépouille ($\alpha$) des arêtes de coupe (17) de l'outil de fraisage (2) ;
- un rayon d'acuité ($r_\beta$) des arêtes de coupe (17) de l'outil de fraisage (2) ; et
- une usure en dépouille des arêtes de coupe (17) de l'outil de fraisage (2).

3. Procédé selon l'une des revendications 1 et 2,
**caractérisé en ce que** la première étape de traitement de données (E3) comprend :

- une sous-étape de calcul analytique (E31) consistant à déterminer, à partir d'un modèle cinématique du fraisage de référence réalisé à l'étape de fraisage (E2), des expressions mathématiques des efforts d'usinage théoriques en fonction des coefficients d'efforts spécifiques (13) ; et
- une sous-étape d'identification (E32) consistant à identifier lesdits coefficients d'efforts spécifiques (13) en minimisant les écarts entre les valeurs d'efforts d'usinage (12) mesurées à l'étape de fraisage (E2) et les efforts d'usinage théoriques.

4. Procédé selon l'une quelconque des revendications 1 à 3,
**caractérisé en ce que** l'étape de coupe orthogonale (E4) consiste à mesurer les valeurs d'au moins certaines des grandeurs géométriques (14) suivantes :

- un angle d'inclinaison de plan de cisaillement primaire ($\Phi_n$) ;
- une longueur de contact de copeau sur la face de coupe ($L_c$) ;
- une longueur de contact en dépouille ($L_\alpha$) ; et
- une épaisseur moyenne de copeau coupé ($h_c$).

5. Procédé selon l'une quelconque des revendications 1 à 4,
**caractérisé en ce qu'**il comporte une troisième étape de traitement de données (E6), mise en oeuvre après la deuxième étape de traitement de données (E5) si la température finale ($T_f$) est inférieure à la température critique ($T_c$), ladite troisième étape de traitement de données (E6) comprenant :

   • une troisième sous-étape de calcul (E61) consistant à calculer, à partir d'au moins certaines données de l'ensemble de données d'entrée (10) et des valeurs des grandeurs géométriques (14) mesurées à l'étape de coupe orthogonale (E4), un flux thermique dit primaire ($Q_s$) généré dans une zone dite de cisaillement primaire (A1) de la seconde pièce témoin (4B), et un flux thermique dit secondaire ($Q_\gamma$) généré dans une zone dite de cisaillement secondaire (A2) de la seconde pièce témoin (4B) ;
   • une quatrième sous-étape de calcul (E62) consistant à calculer, à partir du flux thermique primaire ($Q_s$) et du flux thermique secondaire ($Q_\gamma$), une température dite totale ($T_t$) représentative de la température maximale au niveau d'une surface usinée (5B) de la seconde pièce témoin (4B) lors de la coupe orthogonale ; et
   • une sous-étape de comparaison (E63) consistant à comparer la température totale ($T_t$) à la température critique ($T_c$) et à :

      ◦ rejeter le jeu de paramètres opératoires (3) si la température totale ($T_t$) est supérieure ou égale à la température critique ($T_c$) ; et
      ◦ valider le jeu de paramètres opératoires (3) si la température totale ($T_t$) est inférieure à la température critique ($T_c$).

6. Dispositif de validation d'un jeu de paramètres opératoires d'une machine-outil, ladite machine-outil comportant un outil de fraisage (2) et étant destinée à réaliser un fraisage d'une pièce à usiner (4),
   **caractérisé en ce qu'**il comporte au moins :

   - une unité d'acquisition (16) configurée pour recevoir un ensemble de données d'entrée (10) comprenant au moins :

      • un jeu de paramètres opératoires (3) à valider, comportant des paramètres liés à la machine-outil et des paramètres liés à l'outil de fraisage (2) ; et
      • un jeu de paramètres additionnels (11) relatif à des caractéristiques de l'outil de fraisage (2) et de la pièce à usiner (4) ;

   - une première unité de traitement de données (19) configurée pour déterminer, à partir de l'ensemble de données d'entrée (10) et de valeurs d'efforts d'usinage (12), des coefficients d'efforts spécifiques (13) représentatifs desdits efforts d'usinage (12), lesdites valeurs d'efforts d'usinage (12) correspondant à des valeurs d'efforts appliqués par l'outil de fraisage (2) sur une première pièce témoin (4A), représentative de la pièce à usiner (4), lors d'un fraisage de référence de ladite première pièce témoin (4A) ;
   - une deuxième unité de traitement de données (22) configurée pour :

      • calculer, à partir d'au moins certaines données de l'ensemble de données d'entrée (10), d'au moins l'un des coefficients d'efforts spécifiques (13) et de valeurs de grandeurs géométriques (14), un flux thermique dit tertiaire ($Q_\alpha$) généré dans une zone dite de cisaillement tertiaire (A3), lesdites valeurs de grandeurs géométriques (14) correspondant à des valeurs liées à un copeau de référence (7B) d'une seconde pièce témoin (4B) généré par l'outil de fraisage (2) lors d'une coupe orthogonale de ladite seconde pièce témoin (4B) ;
      • calculer, à partir du flux thermique tertiaire ($Q_\alpha$), une température dite finale ($T_f$) représentative de la température maximale au niveau d'une surface usinée (5B) de la seconde pièce témoin (4B) lors de la coupe orthogonale ; et
      • comparer la température finale ($T_f$) à une température dite critique ($T_c$) et à :

         ◦ rejeter le jeu de paramètres opératoires (3) si la température finale ($T_f$) est supérieure ou égale à la température critique ($T_c$) ; et
         ◦ valider le jeu de paramètres opératoires (3) si la température finale ($T_f$) est inférieure à la température critique ($T_c$).

7. Dispositif selon la revendication 6,
   **caractérisé en ce qu'**il comporte une troisième unité de traitement de données (28) configurée pour :

   • calculer, à partir d'au moins certaines données de l'ensemble de données d'entrée (10) et des valeurs des grandeurs géométriques (14) mesurées lors de la coupe orthogonale, un flux thermique dit primaire ($Q_s$) généré dans une zone dite de cisaillement primaire (A1) de la seconde pièce témoin (4B), et un flux thermique dit secondaire ($Q_\gamma$) généré dans une zone dite de cisaillement secondaire (A2) de la seconde pièce témoin (4B) ;

• calculer, à partir du flux thermique primaire ($Q_s$) et du flux thermique secondaire ($Q_\gamma$), une température dite totale ($T_t$) représentative de la température maximale au niveau d'une surface usinée (5B) de la seconde pièce témoin (4B) lors de la coupe orthogonale ; et

• comparer la température totale ($T_t$) à la température critique ($T_c$) et à :

◦ rejeter le jeu de paramètres opératoires (3) si la température totale ($T_t$) est supérieure ou égale à la température critique ($T_c$) ; et

◦ valider le jeu de paramètres opératoires (3) si la température totale ($T_t$) est inférieure à la température critique ($T_c$).

**8.** Dispositif selon l'une quelconque des revendications 6 et 7, **caractérisé en ce qu'**il comporte une platine dynamométrique (20) configurée pour mesurer les valeurs des efforts d'usinage (12) lors du fraisage de référence de la première pièce témoin (4A).

**9.** Dispositif selon l'une quelconque des revendications 6 à 8, **caractérisé en ce qu'**il comporte une unité de mesure (23) configurée pour réaliser des mesures optiques des grandeurs géométriques (14) lors de la coupe orthogonale de la seconde pièce témoin (4B).

Fig. 1

Fig. 2

Fig. 3

EP 4 386 498 A1

Fig. 4

22

17    rβ    18    2

ae

5

4

7    F2

h(θ,z)    eth    θth

9

X
Y

Fig. 5

2

18

17

27

γ

26

α

ae

7    5

4

fz

F2

X
Y

Fig. 6

Fig. 7

Fig. 8

Fig. 9

Fig. 10

Fig. 11

Europäisches
Patentamt

European
Patent Office

Office européen
des brevets

## RAPPORT DE RECHERCHE EUROPEENNE

Numéro de la demande

EP 23 21 3973

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 3 974 104 A1 (AIRBUS OPERATIONS SAS [FR]; AIRBUS SAS [FR]) 30 mars 2022 (2022-03-30) * alinéa [0001] – alinéa [0031]; revendication 1 * ----- | 1-9 | INV. G05B23/02 G05B19/04 G05B19/406 |
| Y | RAMI ANIS ET AL: "Residual stresses computation induced by turning of AISI 4140 steel using 3D simulation based on a mixed approach", THE INTERNATIONAL JOURNAL OF ADVANCED MANUFACTURING TECHNOLOGY, SPRINGER, LONDON, vol. 91, no. 9, 30 janvier 2017 (2017-01-30), pages 3833-3850, XP036289184, ISSN: 0268-3768, DOI: 10.1007/S00170-017-0047-1 [extrait le 2017-01-30] * page 3833 – page 3841 * * page 3845 – page 3850 * ----- | 1-9 | |
| A | COZ G LE ET AL: "Temperature variation in the workpiece and in the cutting tool when dry milling Inconel 718", THE INTERNATIONAL JOURNAL OF ADVANCED MANUFACTURING TECHNOLOGY, SPRINGER, LONDON, vol. 74, no. 5, 22 juin 2014 (2014-06-22), pages 1133-1139, XP035394335, ISSN: 0268-3768, DOI: 10.1007/S00170-014-6006-1 [extrait le 2014-06-22] * page 1137 – page 1138 * ----- -/-- | 1,6 | DOMAINES TECHNIQUES RECHERCHES (IPC) G05B |

Le présent rapport a été établi pour toutes les revendications

| Lieu de la recherche | Date d'achèvement de la recherche | Examinateur |
|---|---|---|
| Munich | 25 avril 2024 | Kuntz, Jean-Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 23 21 3973

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FIGUEIREDO ALISSON A A ET AL: "Heat flux in machining processes: a review", THE INTERNATIONAL JOURNAL OF ADVANCED MANUFACTURING TECHNOLOGY, SPRINGER, LONDON, vol. 120, no. 5-6, 5 mars 2022 (2022-03-05), pages 2827-2848, XP037811898, ISSN: 0268-3768, DOI: 10.1007/S00170-022-08720-4 [extrait le 2022-03-05] * page 2817 – page 2833 * ----- | 1,6 | |
| A | CALLEJA A ET AL: "Reliable Manufacturing Process in Turbine Blisks and Compressors", PROCEDIA ENGINEERING, ELSEVIER BV, NL, vol. 63, 10 septembre 2013 (2013-09-10), pages 60-66, XP028714654, ISSN: 1877-7058, DOI: 10.1016/J.PROENG.2013.08.214 * page 1 – page 5 * ----- | 1,6 | |
| A | US 5 904 457 A (SUWIJN PAUL W [US] ET AL) 18 mai 1999 (1999-05-18) * colonne 3 * ----- | 1,6 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 25 avril 2024 | Kuntz, Jean-Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

page 2 de 2

# EP 4 386 498 A1

## ANNEXE AU RAPPORT DE RECHERCHE EUROPEENNE
## RELATIF A LA DEMANDE DE BREVET EUROPEEN NO.

EP 23 21 3973

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-04-2024

| Document brevet cité au rapport de recherche | | Date de publication | Membre(s) de la famille de brevet(s) | | Date de publication |
|---|---|---|---|---|---|
| EP 3974104 | A1 | 30-03-2022 | CN | 115016395 A | 06-09-2022 |
| | | | EP | 3974104 A1 | 30-03-2022 |
| | | | FR | 3114529 A1 | 01-04-2022 |
| | | | US | 2022100168 A1 | 31-03-2022 |
| US 5904457 | A | 18-05-1999 | AU | 3310297 A | 14-01-1998 |
| | | | US | 5904457 A | 18-05-1999 |
| | | | WO | 9749523 A1 | 31-12-1997 |

EPO FORM P0460

Pour tout renseignement concernant cette annexe : voir Journal Officiel de l'Office européen des brevets, No.12/82